# EUROPEAN PATENT APPLICATION

(11) **EP 2 341 261 A2**
(43) Date of publication of application: **06.07.2011**
(21) Application number: 10169258.0
(22) Date of filing: 12.07.2010
(51) Int. Cl.: F16D 55/28, F16D 55/00, F16D 65/14

(54) **Sequential electromagnetic brake for lifts**

(30) Priority: 18.12.2009 ES 200902363
(71) Applicant: Alzola Elizondo, Luis, 01194 Berrosteguieta (Álava) (ES)
(72) Inventor: Alzola Elizondo, Luis, 01194 Berrosteguieta (Álava) (ES)
(74) Representative: Becker Kurig Straus

(57) **Abstract**

Sequential electromagnetic brake for lifts which is characterised in that the mobile induced disc (6) is constituted by at least two different disc parts (6a, 6b); a main disc part (6a) and by an auxiliary disc part (6b) which are unequal in thickness and/or in configuration and/or in friction conditions of their guiding means (5) and the differing distance to the disc brake (1) with respect to the front side (6d, 6e) of the main (6a) and auxiliary (6b) disc parts in the non-braking state and/or their different actuation velocities guarantee the non-simultaneity of actuation destination impact of each one of the disc parts (6a, 6b), of which each one on its own is capable of a sufficient braking effort to slow down the car with its rated load.

## Description

### FIELD OF THE INVENTION

This invention relates to an electromagnetic brake for lifts, of those which respond to a general constitution which comprises a disc brake, a ferromagnetic disc, an electromagnetic winding connected to the ferromagnetic disc, elastic compression means and other guiding means which drive and guide the displacement of a mobile induced disc against said disc brake in the braking action. In an operational state of the lift, there is current passage and the electromagnetic winding is excited by the passage of electrical current and creates a magnetic field which attracts the mobile induced disc with respect to the ferromagnetic disc, compressing the elastic compression means, which end up full of elastic energy; when there is no electrical current passage through the electromagnetic winding the magnetic field previously created thereby and the elastic compression means disappear due to the accumulated energy, and they drive the mobile induced disc against the disc brake, thereby producing the resting, safety or emergency brake of the lift.

### PRIOR STATE OF THE ART

Relating to this type of brake is the European Standard EN 81-1:1985, of December 1985, titled "Safety rules for the construction and installation of electric lifts", which, on page 62, states:

*"This brake* on *its own shall be capable* of *stopping the machine when the car is travelling downward* at rated *speed and with the rated load plus* 25%. *In these conditions the retardation* of *the car shall not exceed* that *resulting from operation of the safety gear or stopping on the buffer. All the mechanical components of the brake which take part in the application of the braking action on the drum or disk shall be installed in two sets and each one* of *the sets, if* the *other is not working, must on its own be capable* of *exerting a sufficient braking effort to slow down the car, travelling* at *its rated speed".*

This double set of parts of the induced disc is mandatory for the manufacturers by European Standard EN 81-1:1985 and it is known that it is made with the mobile induced disc constituted by two half crescents which are exactly the same and which actuate simultaneously, interpreting that this manner offers greater safety.

Nevertheless, this is a restrictive interpretation of the European Standard, given that it only forces the mechanical elements which take part in the braking effort to be double sets and that each one, on its own, must be capable of exerting the sufficient braking effort. I.e. the standard establishes that there is a duplicity of braking means wherein each independent unit is capable of producing the sufficient braking effort. Then each one of the parts is already mechanically dimensioned to produce the desired safety, and consequently the simultaneity of actuation does not increase the safety.

In any case, in compliance with the safety required by the Standard EN 81-1:1985, the known productions wherein the two sets are exactly the same and act simultaneously have as a drawback that they produce excessive noise, in a scenario wherein the manufacturers demand a reduction of the noise level due to the actuation of the brake. On the other hand, the simultaneity of the blow also results in considerable mechanical stress for the grooving of the disc brake for its rotational coupling to the axle of the braking mechanism.

### EXPLANATION OF THE INVENTION AND ADVANTAGES

The present invention improves upon the concept used to date of identical structure of said two sets and of simultaneous actuation thereof, proposing a braking device for lifts wherein the mobile induced disc is constituted by a main disc part and by an auxiliary disc part which are unequal in thickness and/or in configuration and/or in friction conditions of their guiding means and the different distance to the disc brake with respect to the frontal face of the main and auxiliary disc parts in the non-braking state and/or their different actuation speeds guarantee the non-simultaneity of destination actuation impact of each one of the disc parts, of which each one on its own shall be capable of the sufficient braking effort to slow down the car travelling with its rated load. What is constant is that the rated path of the main and auxiliary disc parts, in the event that no other factor is introduced which, in one way or another, modifies their thicknesses, is of 25 hundredths of a millimetre.

This proposal responds to a concept which suggests that the brake has an uneven structure wherein, to pass from the non-braking state to the braking state, the main and auxiliary discs parts are going to have to cover different distances at an equal velocity or equal distances at a different velocity; which, in short, determines a sequential braking manoeuvre wherein two successive impacts take place, even though each one of them is of much lesser intensity than when, as has occurred to date, a single impact takes place but of a much greater intensity. As has been proved, the non-simultaneity proposed herein results in a reduction of the noise level by ten percent, which is a considerable advantage; furthermore, that produced by the manoeuvre by means of two successive blows of lesser intensity means that the effort to be supported by the splined shaft of the braking device against the current situation of a single blow of much greater intensity is much smaller.

According to a mode of embodiment of the invention, the inequality of mass is achieved because the main part of the disc is of a greater thickness than that of the auxiliary part of the disc. An immediate consequence of that is that in a non-braking state, there is a possible path between the main disc part and the disc brake which is shorter than the possible path between the auxiliary disc part and said disc brake; so that the main disc part will travel a short gap space, which, in addition to achieving that the braking manoeuvre is sequential, achieves a softer acoustic level.

Another way of making the masses unequal, and which can be combined with the previous way, consists of the main disc part having at least two (preferably three) escape holes which pass through the thickness thereof, and which are conveniently distributed on its surface, thereby increasing its actuation velocity. Apart from achieving a reduction of the mass, these holes assist in the evacuation of the air from the cushion existing between said main disc part and the disc brake, which permits a faster advancement of the former. Therefore, the main disc part has a greater thickness, which implies a shorter path and fewer escape holes, which will permit the passage of air which will result in a smaller transition resistance of the main disc part than the auxiliary disc part; therefore the braking disc will arrive first, thereby achieving a non-simultaneous actuation which produces less sound.

Obviously, the invention comprises the possibility that the main disc part and the auxiliary disc part are equal in thickness but with unequal masses; as the inequality of the masses can be achieved by, in the parts of the main and auxiliary discs, using materials of different densities which, against a single impulse of the elastic compression means, can be moved differently and do not reach the brake disc at the same time.

In order to achieve that the gap spaces to be travelled by the parts of the main and auxiliary discs are unequal, the invention considers various possibilities, amongst which the following must be highlighted: one of them is that the auxiliary disc part has its thickness reduced through mechanization; another is that the main disc part has its greater thickness increased through the application of a chemical coating; and another is that there is a parasitic film between the ferromagnetic disc and the main disc part.

Another way of achieving a sequential braking manoeuvre consists of the elastic compression means having unequal elastic modules, as this deals with those that are associated to the main disc part or the auxiliary disc part; so that the elastic impulse shall be of different intensity in each case and, therefore, the velocity with which the main and auxiliary disc parts shall also be different.

In accordance with the invention, the sequential braking manoeuvre can be achieved by means of different degrees of friction in each case; a mode of embodiment is considered with this purpose wherein the guiding means are friction bushings which, through dimensional adjustment or material properties, produce friction actions of unequal intensity as this deals with those that are associated to the main disc part or the auxiliary disc part.

Another special feature of the brake according to the invention consists of the fact that the ferromagnetic disc is a casing constituted in the shape of a solid disc wherein, with axial symmetry and disposed in the shape of a crown one next to the other, a plurality of circular annular die-casts are made whereon are fastened circular electromagnetic windings: It is considered in conjunction with this that: - the elastic compression means are helical springs which are arranged radially in pairs, located between two of the consecutive circular annular die-casts, so that each helical compression spring is in a housing made in said ferromagnetic disc; - the circular electromagnetic windings are joined in two differentiated groups independently associated to the parts of the main disc and the auxiliary disc; - the quantity of circular electromagnetic windings is equal to that of the helical compression springs, in the case whereof it is preferable for the number of circular electromagnetic windings and helical compression springs to be eight; - the pairs of helical compression springs are alternated between pairs of consecutive circular electromagnetic windings; - optionally, the total quantity of circular electromagnetic windings is different than that of helical compression springs.

Another way of achieving that the braking manoeuvre is not simultaneous consists of the group of circular electromagnetic windings which are independently associated to the parts of the main disc and the auxiliary disc producing magnetic fields of unequal intensities.

### DRAWINGS AND REFERENCES

In order to better understand the nature of the invention, a mode of industrial embodiment is represented in the attached drawings with a strictly illustrative and non-limitative character of example.
- fig. 1: is a perspective exploded view of an electromagnetic brake according to the invention, wherein the indicator arrow shows the assembly in that direction and wherefrom a sectioned close-up has been taken which shows the parts of the main (6a) and auxiliary (6b) disc parts in relation to the diametral plane which separates them in this close-up shown of the non-braking state; the section is given passing through the I-I axis,

- fig. 2: symmetrical to an orifice (7) illustrated in the exploded view; is the frontal view of the parts of the main (6a) and auxiliary (6b) discs, showing the side which faces the disc brake (1);
- fig. 3: represents the mid-view cross-section indicated by the line V-V in figure 3;
- fig. 4: is a view similar to the close-up of figure 1, showing the non-braking state wherein the locking direction (15) in which the parts of the disc (6a, 6b) shall travel is represented;
- fig. 5: is like figure 4, but showing the braking state wherein the unlocking direction (16) in which the parts of the disc (6a, 6b) will travel is represented;
- fig. 6: is the frontal view of the ferromagnetic disc (2) from its internal face;
- fig. 7: is the VII-VII cross-section indicated in figure 6;
- fig. 8: is the VIII-VIII cross-section indicated in figure 6.

The following references are indicated in these figures:
1.- Disc brake
2.- Ferromagnetic disc
2a.- Circular annular die-casts in ferromagnetic disc (2) for windings (3)
2b.- Housing in disc (2) for helical compression springs
2c.- Die-casts in ferromagnetic disc (2) for buffers (10)
3.- Circular electromagnetic windings, or electromagnetic windings
4.- Helical compression springs, or elastic compression means
5.- Friction bushings, or guiding means
6.- Mobile induced disc
6a.- Main disc part, of disc (6)
6b.- Auxiliary disc part, of disc (6)
6c.- Holes for friction bushings (5)
6d.- Front side of the main disc part (6a)
6e.- Front side of the auxiliary disc part (6b)
7.- Orifices in main disc part (6a), or escape holes
8.- Chemical coating
9.- Parasitic film
10.- Distance between ferromagnetic disc (2) and disc brake (1)
11.- Greater thickness of the main disc part (6a) or greater thickness
12.- Thickness of the auxiliary disc part (6b) or lesser thickness
13.- Path of the main disc part (6a) or shorter path
14.- Path of the auxiliary disc part (6b) or longer path
15.- Locking direction
16.- Unlocking direction

### PRESENTATION OF A PREFERRED EMBODIMENT

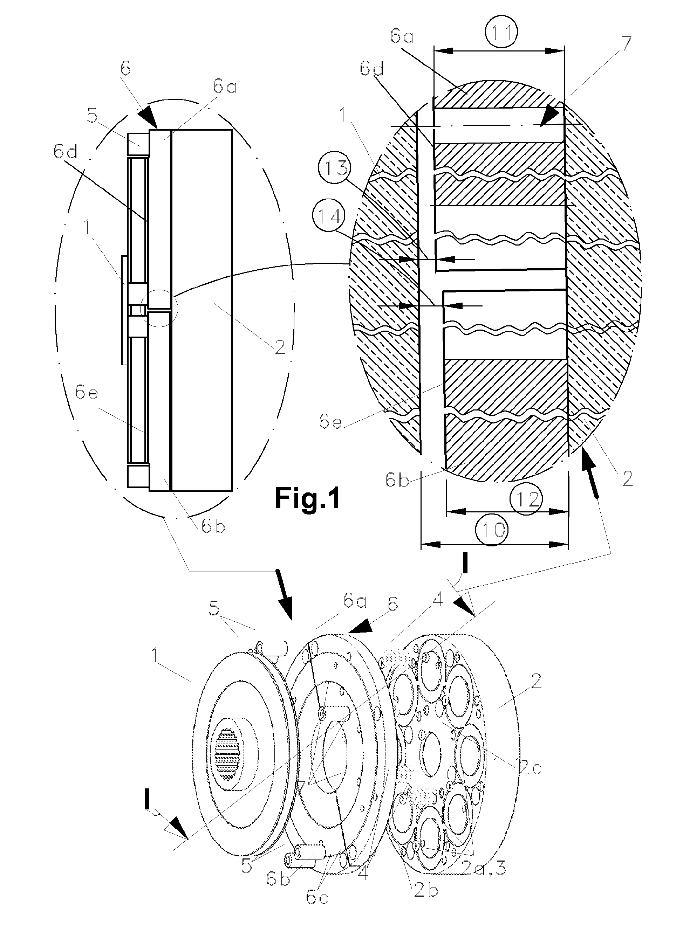

In relation to the drawings and references listed above, a mode of preferred execution of the object of the invention is illustrated in the attached blueprints, relating to an electromagnetic brake which, as illustrated by figure 1, comprises a general constitution which is made up of a disc brake (1), a ferromagnetic disc (2), an electromagnetic winding (3) associated to the ferromagnetic disc (2), elastic compression means (4) and other guiding means (5) which in the braking action drive and guide the movement of a mobile induced disc (6) against said disc brake (1).

Within this general constitution, the special feature of the invention consists of the mobile induced disc (6) being constituted by two disc parts (6a, 6b), a main disc part (6a) and by an auxiliary disc part (6b), which are unequal in thickness and/or in configuration and/or in friction conditions of their guiding means (5) and the differing distance to the disc brake (1) with respect to the front side (6d, 6e) of the main (6a) and auxiliary (6b) disc parts in the non-braking state and/or their different actuation velocities guarantee the non-simultaneity of actuation destination impact of each one of the disc parts (6a, 6b), of which each one on its own is capable of a sufficient braking effort to slow down the car with its rated load. The consequence of the concept proposed herein is that, against the solutions known to date, the proposed brake features an unequal structure of the mobile induced disc (6) which, nevertheless, does not prevent it from fulfilling the requirements of the aforementioned European Standard EN 81-1:1985; since any of the main (6a) or auxiliary (6b) disc parts are, each one of them on their own, capable of performing the sufficient braking effort. The difference lies in that with this brake of the invention the impact of the main (6a) and auxiliary (6b) disc parts is not going to be simultaneous as has occurred up until now, but they are rather going to be two successive impacts but each one of them of a lesser intensity, which permits a reduction of noise level to be achieved, which has been requested by the lift manufacturers, while two successive impacts result in a lighter mechanical stress for the splined shaft of the brake than that currently produced by means of a single impact of double intensity.

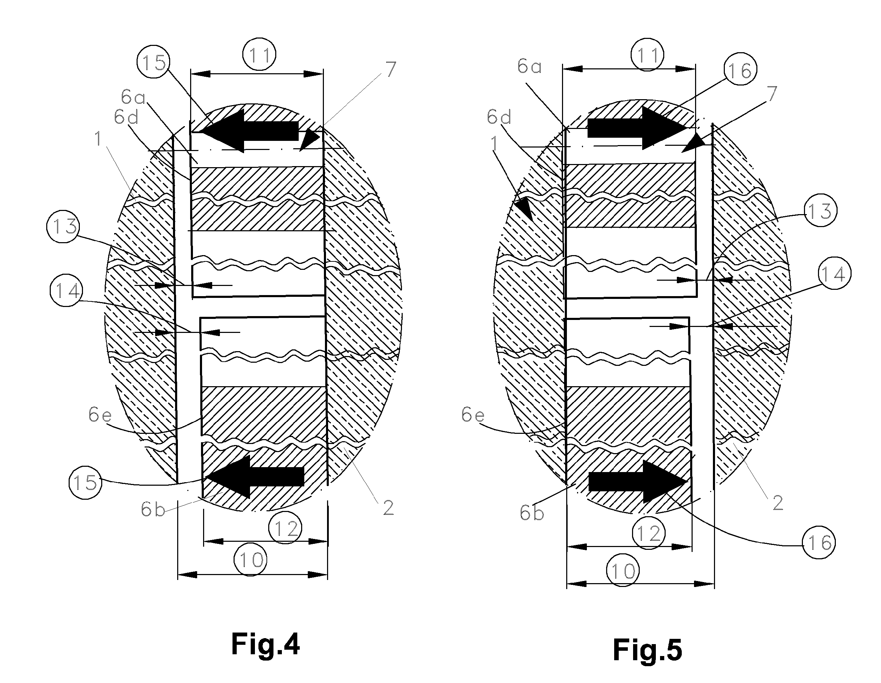

Figure 1 illustrates a mode of embodiment of the invention, wherein the main disc part (6a) is of a greater thickness (11) which is greater than the thickness (12) of the auxiliary disc part (6b) and in non-braking state; there is a possible path (13) between the frontal side (6d) of the main disc part (6a) and the disc brake (1) which is shorter than the possible path (14) between the frontal side (6e) of the auxiliary disc part (6b) and said disc brake (1); the main disc part (6a) reaching the destination brake impact first. As the distance (10) between the ferromagnetic disc (2) and the disc brake (1) is specific (of the order of 25 hundredths of a millimetre), the result is that the main (6a) and auxiliary (6b) disc parts shall reach the disc brake (1) not in a simultaneous manner, but rather successively; figure 5 shows the updated braking state, where the paths (13) and (14) are now manifested between the main (6a) and auxiliary (6b) disc parts, and the ferromagnetic disc (2).

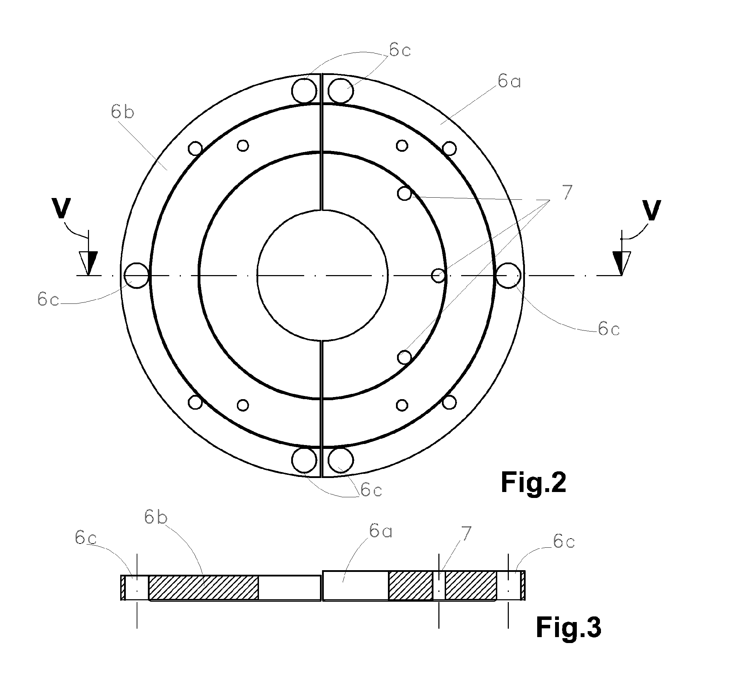

The solution from figures 1 and 2 also shows another option of the invention to modify the mass of the parts (6a, 6b) of the mobile induced disc (6); the main disc part (6a) has at least two escape holes (7) which pass through its width, and which are conveniently distributed on its surface; in figure 2, an embodiment with three of said holes (7) is shown. Apart from modifying the mass of the main disc part (6a), the holes facilitate the evacuation of the air in the advancement thereof, which helps achieve the objective of producing a sequential braking manoeuvre by means of an unequal structure of the mobile induced brake (6).

Figures 4 and 5 show a close up of the braking and non-braking states wherein the arrows (15, 16) illustrate the locking (15) and unlocking (16) directions which the disc parts (6a, 6b) will cover. As these figures 4 and 5 show, the main disc part (6a) has a greater thickness (11), so it has a shorter path (13) to cover before reaching the disc brake (1). Additionally, said main disc part (6a) is equipped with escape holes (7), which will permit the passage of air which results in a lesser transition resistance for the main disc part than for the auxiliary disc part (6b); therefore it will reach the disc brake (1) first, thereby achieving a non-simultaneous actuation with a lower noise level.

The invention considers various modes of making the thicknesses 11 and 12 unequal (and therefore, the paths 13 and 14), amongst which figure: one, consisting of the auxiliary disc part (6b) having its thickness (12) decreased by mechanization; another, wherein the main disc part (6a) has its greater thickness (11) increased by the application of a chemical coating (8); another, wherein there exists a parasitic film (9) between the ferromagnetic disc (2) and the main disc part (6a).

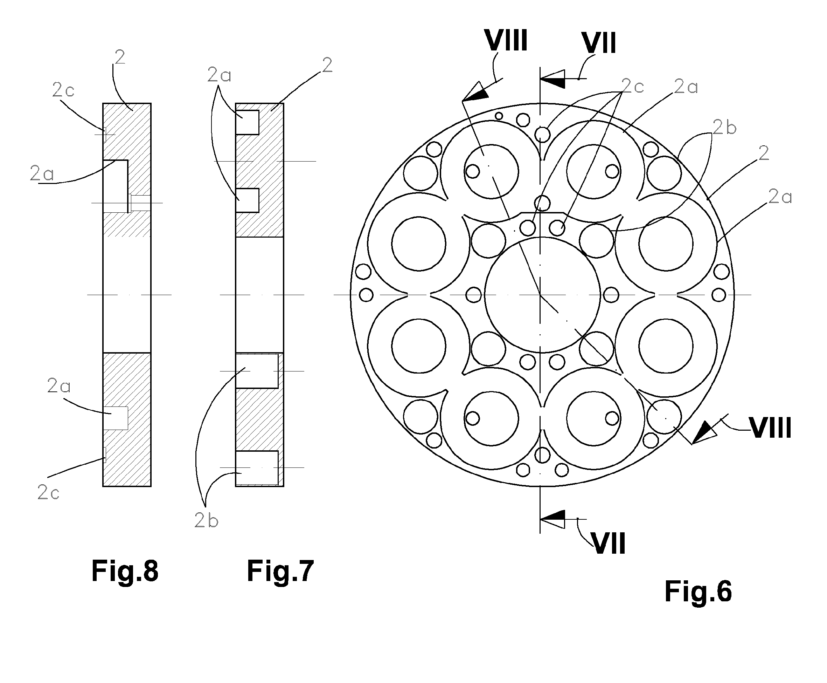

Other modes of achieving the sequential manoeuvre according to the invention are embodiments such as the following: one, wherein the elastic compression means (4) have unequal elastic modules of the type which are associated to the main disc part (6a) or the auxiliary disc part (6b); another, wherein the guiding means (5) are friction bushings which produce friction actions of unequal intensity, of those which are associated to the main disc part (6a) or the auxiliary disc part (6b), through dimensional adjustment or through material properties; another, wherein said electromagnetic winding (3) is made in such a way that it generates magnetic fields of unequal intensities for the main disc part (6a) and for the auxiliary disc part (6b), this option which is going to be facilitated by the special configuration considered in the brake of the invention for the electromagnetic winding (3), as illustrated in figures 1 and 6.

In fact, in the proposed brake the ferromagnetic disc (2) is a casing constituted in the shape of a solid disc wherein, with axial symmetry and disposed in a crown shape one next to the other, a plurality of circular annular die-casts (2a) are made whereon both circular electromagnetic windings (3) are fastened; wherein: - the elastic compression means (4) are helical springs which are arranged radially in pairs, located between two of the consecutive circular annular die-casts (2a), so that each helical compression spring (4) is in a housing (2b) made in said ferromagnetic disc (2), the above being possible to be carried out with different elastic module with the helical springs (4) assigned to one and another of the main (6a) and auxiliary (6b) disc parts; - the circular electromagnetic windings (3) are joined in two differentiated groups independently associated to the main (6a) and auxiliary (6b) disc parts, which again allow the special characteristics of each grouping of these circular electromagnetic windings (3) to be unequal and, therefore, the intensities of their magnetic fields to be unequal as well; - both a version wherein the quantity of circular electromagnetic windings (3) is equal to that of the helical compression springs (6), as well as another wherein the total quantity of circular electromagnetic windings (3) is different from that of helical compression springs (4) is considered; preferably, the number of circular electromagnetic windings (3) and helical compression springs (4) is eight; - the pairs of helical compression springs (4) are alternated between pairs of consecutive circular electromagnetic windings (3).

## Claims

1. Sequential electromagnetic brake for lifts, which has a disc brake (1), a ferromagnetic disc (2), an electromagnetic winding (2) associated to the ferromagnetic disc (2); elastic compression means (4) and other guiding means (5) which in the braking action drive and guide the movement of an mobile induced disc (6) against said disc brake (1), **characterised in that** the mobile induced disc (6) is constituted by at least two different disc parts (6a, 6b); a main disc part (6a) and by an auxiliary disc part (6b) which are unequal in thickness and/or in configuration and/or in friction conditions of their guiding means (5) and the differing distance to the disc brake (1) with respect to the front side (6d, 6e) of the main (6a) and auxiliary (6b) disc parts in the non-braking state and/or their different actuation velocities guarantee the non-simultaneity of actuation destination impact of each one of the disc parts (6a, 6b), of which each one on its own is capable of a sufficient braking effort to slow down the car with its rated load.

2. Sequential electromagnetic brake for lifts, according to the first claim, **characterised in that** the main disc part (6a) is of a greater thickness (11) which is greater than the thickness (12) of the auxiliary disc part (6b) and in non-braking state; there is a possible path (13) between the frontal side (6d) of the main disc part (6a) and the disc brake (1) which is shorter than the possible path (14) between the frontal side (6e) of the auxiliary disc part (6b) and said disc brake (1); the main disc part (6a) reaching the destination brake impact first.

3. Sequential electromagnetic brake for lifts, according to the previous claims, **characterised in that** the main disc part (6a) has at least two escape holes (7) which pass through its width, and which are conveniently distributed on its surface, increasing its actuation velocity.

4. Sequential electromagnetic brake for lifts, according to the previous claims, **characterised in that** the main disc part (6a) has its greater thickness (11) due to manufacturing mechanization.

5. Sequential electromagnetic brake for lifts, according to the previous claims, **characterised in that** the main disc part (6a) has its greater thickness (11) due to the application of a chemical coating (8).

6. Sequential electromagnetic brake for lifts, according to the previous claims, **characterised in that** the main disc part (6a) has its greater thickness (11) due to the insertion of a parasitic film (9) between the ferromagnetic disc (2) and the main disc part (6a).

7. Sequential electromagnetic brake for lifts, according to the previous claims, **characterised in that** the auxiliary disc part (6b) has its thickness (11) decreased though mechanization.

8. Sequential electromagnetic brake for lifts, according to the previous claims, **characterised in that** the guiding means (5) of the main disc part (6a) have a lower friction to the guiding means (5) of the auxiliary disc part (6b) due to the inequality in the dimensional adjustment and/or friction properties of the material of its friction bushings.

9. Sequential electromagnetic brake for lifts, according to the previous claims, **characterised in that** said elastic compression means (4) have unequal elastic modules of the type which are associated to the main disc part (6a) or the auxiliary disc part (6b).

10. Sequential electromagnetic brake for lifts, according to the previous claims, **characterised in that** the ferromagnetic disc (2) is a casing constituted in the shape of a solid disc wherein, with axial symmetry and disposed in a crown shape one next to the other, a plurality of circular annular die-casts (2a) are made whereon both circular electromagnetic windings (3) are fastened.

11. Sequential electromagnetic brake for lifts, according to the previous claims, **characterised in that** the elastic compression means (4) are helical springs which are arranged radially in pairs, located between two of the consecutive circular annular die-casts (2a), so that each helical compression spring (4) is in a housing (2b) made in said ferromagnetic disc (2).

12. Sequential electromagnetic brake for lifts, according to the previous claims, **characterised in that** the circular electromagnetic windings (3) are joined in two differentiated groups independently associated to the main (6a) and auxiliary (6b) disc parts.

13. Sequential electromagnetic brake for lifts, according to claims nine through twelve, **characterised in that** the quantity of circular electromagnetic windings (3) is equal to that of the helical compression springs (6).

14. Sequential electromagnetic brake for lifts, according to claim twelve, **characterised in that** the number of circular electromagnetic windings (3) and helical compression springs (4) is eight.

15. Sequential electromagnetic brake for lifts, according to the previous claims, **characterised in that** the pairs of helical compression springs (4) are alternated between pairs of consecutive circular electromagnetic windings (3).

16. Sequential electromagnetic brake for lifts, according to claims nine through eleven, **characterised in that** the total quantity of circular electromagnetic windings (3) is different than that of the helical compression springs (4).

17. Sequential electromagnetic brake for lifts, according to the previous claims, **characterised in that** the group of circular electromagnetic windings (3) that are independently associated to the main (6a) and auxiliary (6b) disc parts produces magnetic fields of unequal intensities.
